# EUROPÄISCHE PATENTANMELDUNG

(11) **EP 2 822 159 A2**
(43) Veröffentlichungstag der Anmeldung: **07.01.2015**
(21) Anmeldenummer: 14002249.2
(22) Anmeldetag: 01.07.2014
(51) Int. Cl.: H02K 16/00, H02K 7/116

(54) **Drehantrieb**

(30) Priorität: 01.07.2013 DE 202013005840 U; 04.06.2014 DE 202014004481 U
(71) Anmelder: WMH Herion Antriebstechnik GmbH, 85283 Wolnzach (DE)
(72) Erfinder: Ritzer, Stephan, D - 86643 Rennertshofen (DE)
(74) Vertreter: Reichert & Lindner Partnerschaft Patentanwälte

(57) **Zusammenfassung**

Die Erfindung betrifft einen Drehantrieb (1) mit einem elektromotorischen Antrieb (16), der auf Abtriebseinrichtungen (A) wirkt, an denen eine Antriebswirkung des elektromotorischen Antriebs (16) abnehmbar ist, wobei der elektromotorische Antrieb (16) eine Mehrzahl von Elektromotoren (11) enthält, die zu einer Baueinheit zusammengefasst sind, und dass alle Elektromotoren (11) der Mehrzahl von Elektromotoren (11) gemeinschaftlich an den Abtriebseinrichtungen (A) angreifen, die den Elektromotoren (11) nachgeschaltet sind. Ferner betrifft die Erfindung einen Bausatz zum Zusammenstellen eines Drehanatriebs (1) nach einem der vorhergehenden Ansprüche, wobei für unterschiedliche Leistungen des elektromotorischen Antriebs (16) Elektromotoren (11) gleichen Durchmessers und unterschiedlicher Wicklungslängen enthalten sind, und/oder wobei eine Mehrzahl von kombinierbaren Bestandteilen der Abtriebseinrichtungen (A) für unterschiedliche Montagen des Drehantriebs (1) und/oder für unterschiedliche Anschlüsse oder Kombinationen von Drehantriebsabnehmern, und/oder als Bestandteile eines Getriebes (17) zur Realisierung verschiedener Über- oder Untersetzungen des Drehantriebs (1) enthalten sind. Schließlich betrifft die Erfindung noch einen Zahnstangenantrieb (32; 34) mit einem Drehantrieb (1), wobei die Abtriebseinrichtungen (A) am von den Elektromotoren (11) abgewandten Ende ein Stirnrad (33; 35) aufweisen, das mit einer Zahnstange (36) kämmt.

## Beschreibung

Die vorliegende Erfindung betrifft einen Drehantrieb nach dem Oberbegriff des Anspruches 1 und ein Herstellungsverfahren dafür.

Beispielsweise aus der DE 10 2006 046 694 A1 ist ein Drehantrieb mit einem elektromotorischen Antrieb bekannt, der auf einen Abtriebszahnkranz wirkt, an dem eine Antriebswirkung des elektromotorischen Antriebs abnehmbar ist. Der elektromotorische Antrieb besteht aus einem Elektromotor, der über ein Ritzel an seiner Ausgangswelle und weiter über Getriebeeinrichtungen für einen Drehantrieb des Abtriebszahnkranzes sorgt. Einerseits ist für größere Leistungen entsprechend ein leistungsstarker Elektromotor erforderlich, der entsprechend groß und schwer zu handhaben ist. Ferner wirken sich Ungenauigkeiten bei dem einen Elektromotor negativ auf den Drehantrieb aus und müssen eventuell durch aufwendige Steuerungen kompensiert werden.

Die vorliegende Erfindung hat und erreicht das Ziel, einen einfachen und wirtschaftlichen Drehantrieb bereitzustellen.

Dazu schafft die Erfindung einen Drehantrieb nach Anspruhc 1. Ein solcher Drehantrieb enthält einen elektromotorischen Antrieb, der auf Abtriebseinrichtungen wirkt, an denen eine Antriebswirkung des elektromotorischen Antriebs abnehmbar ist, wobei der elektromotorische Antrieb eine Mehrzahl von Elektromotoren enthält, die zu einer Baueinheit zusammengefasst sind, und wobei alle Elektromotoren der Mehrzahl von Elektromotoren gemeinschaftlich an den Abtriebseinrichtungen angreifen, die den Elektromotoren nachgeschaltet sind.

Bevorzugt enthält die Mehrzahl von Elektromotoren vier Elektromotoren und/oder beaufschlagen die Elektromotoren der Mehrzahl von Elektromotoren im Betrieb die Abtriebseinrichtungen gemeinschaftlich.

Vorzugsweise ist ferner vorgesehen, dass der elektromotorische Antrieb eine Mehrzahl von baugleichen Elektromotoren und/oder asynchronen Elektromotoren enthält.

Weiterhin kann mit Vorzug vorgesehen sein, dass die Elektromotoren der Mehrzahl von Elektromotoren mit parallelen Ausgangswellen um eine Zentralachse verteilt angeordnet sind, und dass die Ausgangswelle eines jeden Elektromotors mit einem von letzterem angetriebenen Ritzel versehen ist, die Bestandteil der Abtriebseinrichtungen sind, und die Ritzel aller Elektromotoren mit einem gemeinsamen Abtriebszahnkranz der Abtriebseinrichtungen kämmen. Dabei ist es ferner bevorzugt, wenn die Mehrzahl von Elektromotoren gleichmäßig verteilt und/oder gleichmäßig beabstandet und/oder längs einer Kreislinie konzentrisch um die Zentralachse angeordnet sind. In Weiterbildung davon kann mit Vorteil vorgesehen sein, die Ritzel und der Abtriebszahnkranz der Abtriebseinrichtungen ein Getriebe mit vorgebbarer Über- oder Untersetzung bilden. Eine andere vorteilhafte Weiterbildung besteht darin, dass der gemeinsame Abtriebszahnkranz aller Elektromotoren über ein Kugellager gelagert ist.

Ferner kann mit Vorzug vorgesehen sein, dass eine Steuerung zum Steuern der Gesamtheit der Elektromotoren enthalten ist. In Weiterbildung davon kann für die Gesamtheit der Elektromotoren (11) ein gemeinsamer Frequenzumrichter enthalten sein, der von der Steuerung angesteuert wird. Alternativ gibt es eine für spezielle Anwendungen oder Bauarten bevorzugte Ausgestaltung, gemäß der für die Gesamtheit der Elektromotoren zwei Frequenzumrichter enthalten sind, die von der Steuerung unterschiedlich angesteuert werden, um eine Spielfreiheit des Drehantriebs zu gewährleisten. Noch eine vorteilhafte Weiterbildung besteht darin, dass wenigstens ein Positions-, Winkel- oder Lagesensor enthalten ist, der mit der Steuerung zur Ist-Wert-Übertragung gekoppelt ist, und dass die Steuerung ausgelegt ist, die Elektromotoren in Abhängigkeit von wenigstens einem Ist-Wert und wenigstens einem festlegbaren oder festgelegten Soll-Wert zu steuern, um den Drehantrieb auf den Soll-Wert einzustellen. Ferner kann mit Vorteil zusätzlich oder alternativ vorgesehen sein, dass die Steuerung ausgelegt ist, so auf die einzelnen Elektromotoren einzuwirken, dass die einzelnen Elektromotoren gleichmäßig belastet werden, und/oder dass das Gesamtdrehmoment des elektromotorischen Antriebs auf alle Elektromotoren synchron verteilt wird.

Das Ziel der vorliegenden Erfindung wird auch durch einen Bausatz zum Zusammenstellen eines Drehanatriebs gemäß den vorstehenden Gestaltungen erreicht, wobei für unterschiedliche Leistungen des elektromotorischen Antriebs Elektromotoren gleichen Durchmessers und unterschiedlicher Wicklungslängen enthalten sind, und/oder wobei eine Mehrzahl von kombinierbaren Bestandteilen der Abtriebseinrichtungen für unterschiedliche Montagen des Drehantriebs und/oder für unterschiedliche Anschlüsse oder Kombinationen von Drehantriebsabnehmern, und/oder als Bestandteile eines Getriebes zur Realisierung verschiedener Über- oder Untersetzungen des Drehantriebs enthalten sind.

Ferner wird das Ziel der vorliegenden Erfindung auch mit einem Zahnstangenantrieb mit einem Drehantrieb gemäß den vorstehenden Gestaltungen erreicht, wobei die Abtriebseinrichtungen am von den Elektromotoren abgewandten Ende ein Stirnrad aufweisen, das mit einer Zahnstange kämmt.

Weitere bevorzugte und vorteilhafte Weiterbildungen der Erfindung ergeben sich aus den jeweils abhängigen Ansprüchen und deren Kombinationen sowie aus der nachfolgenden Beschreibung einzelner Ausführungsbeispiele der Erfindung.

Die Erfindung wird anhand von Ausführungsbeispielen nachfolgend unter Bezugnahme auf die Zeichnung lediglich exemplarisch näher erläutert, in der
- Fig. 1: in einer schematischen perspektivischen Ansicht den Grundaufbau ein erstes Ausführungsbeispiel des Drehantriebs veranschaulicht,
- Fig. 2: in einer schematischen perspektivischen Ansicht Einzelheiten des Grundaufbaus eines zweiten Ausführungsbeispiels des Drehantriebs veranschaulicht,
- Fig. 3: in einer schematischen Draufsicht ein erstes Funktionsprinzip des zweiten Ausführungsbeispiels des Drehantriebs für einen linksdrehenden Antrieb veranschaulicht,
- Fig. 4: in einer schematischen Draufsicht ein erstes Funktionsprinzip des zweiten Ausführungsbeispiels des Drehantriebs für einen rechtsdrehenden Antrieb veranschaulicht,
- Fig. 5: in einer schematischen Draufsicht ein erstes Funktionsprinzip des zweiten Ausführungsbeispiels des Drehantriebs für einen spielfreien Antrieb veranschaulicht,
- Fig. 6: in einer schematischen perspektivischen Ansicht Einzelheiten des Grundaufbaus eines dritten Ausführungsbeispiels eines Drehantriebs veranschaulicht,
- Fig. 7: in einer schematischen perspektivischen Schnittansicht Einzelheiten des Grundaufbaus eines vierten Ausführungsbeispiels eines Drehantriebs veranschaulicht,
- Fig. 8: in einer schematischen Schnittansicht die Einzelheiten des Grundaufbaus des vierten Ausführungsbeispiels eines Drehantriebs gemäß der Fig. 7 veranschaulicht,
- Fig. 9: in einer schematischen perspektivischen teilweisen Schnittansicht weitere Einzelheiten des Grundaufbaus des vierten Ausführungsbeispiels eines Drehantriebs gemäß den Fig. 7 und 8 veranschaulicht,
- Fig. 10: in einer schematischen perspektivischen teilweisen Schnittansicht noch weitere Einzelheiten des Grundaufbaus des vierten Ausführungsbeispiels eines Drehantriebs gemäß den Fig. 7 bis 9 veranschaulicht,
- Fig. 11: in einer schematischen perspektivischen Schnittansicht Einzelheiten des Grundaufbaus eines fünften Ausführungsbeispiels eines Drehantriebs veranschaulicht,
- Fig. 12: in einer schematischen Draufsicht Einzelheiten des Grundaufbaus eines sechsten Ausführungsbeispiels eines Drehantriebs veranschaulicht,
- Fig. 13: in einer schematischen perspektivischen Ansicht Einzelheiten des Grundaufbaus eines siebten Ausführungsbeispiels eines Drehantriebs veranschaulicht,
- Fig. 14: in einer schematischen perspektivischen Ansicht Einzelheiten des Grundaufbaus eines achten Ausführungsbeispiels eines Drehantriebs veranschaulicht,
- Fig. 15: in einer schematischen perspektivischen Ansicht Einzelheiten des Grundaufbaus eines achten Ausführungsbeispiels eines Drehantriebs veranschaulicht,
- Fig. 16: in einer schematischen perspektivischen Ansicht Einzelheiten des Grundaufbaus des Ausführungsbeispiels des Drehantriebs aus der Fig. 15 mit weggelassenem Gehäuse veranschaulicht,
- Fig. 17: in einer schematischen perspektivischen Ansicht Einzelheiten des Grundaufbaus des Ausführungsbeispiels des Drehantriebs aus der Fig. 15 mit weggelassenem Gehäuse und einer Abwandlung bei Abtriebseinrichtungen veranschaulicht,
- Fig. 18: ein erstes Ausführungsbeispiel eines Zahnstangenantriebs mit einem Drehantrieb nach der Erfindung in einer schematischen perspektivischen Ansicht zeigt,
- Fig. 19: ein zweites Ausführungsbeispiel eines Zahnstangenantriebs mit einem Drehantrieb nach der Erfindung in einer schematischen perspektivischen Ansicht zeigt,
- Fig. 20a/b: in einer schematischen perspektivischen Ansicht Einzelheiten des Grundaufbaus eines weiteren Ausführungsbeispiels eines Drehantriebs mit und ohne Gehäuse veranschaulicht,
- Fig. 21a/b: in einer schematischen perspektivischen Ansicht Einzelheiten des Grundaufbaus noch eines weiteren Ausführungsbeispiels eines Drehantriebs mit und ohne Gehäuse veranschaulicht, um Leistungsunterschiede zu dem Ausführungsbeispiel gemäß den Fig. 21a/b zu veranschaulichen, und
- Fig. 22: in Alleinstellung perspektivisch ein Beispiel eines Gehäusemantels eines weiteren Ausführungsbeispiels des Drehantriebs zeigt.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

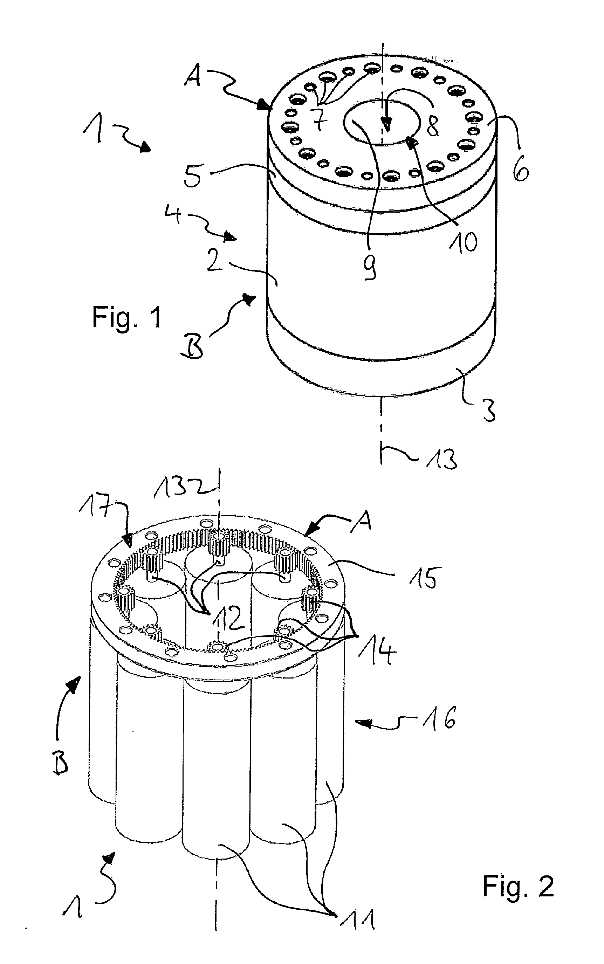

In den Fig. 1 bis 5 ist ein erstes Ausführungsbeispiel eines Drehantriebs 1 veranschaulicht. Die Fig. 1 zeigt eine schematische perspektivische Ansicht des Grundaufbaus des ersten Ausführungsbeispiels des Drehantriebs 1

Der Drehantrieb 1 enthält, wie der Fig. 1 zu entnehmen ist, einen in diesem Fall zylindrischen Mantel 2, der zusammen mit einem Unterteil 3 ein zylindrisches Gehäuse 4 bildet. Für eine bezüglich dem zylindrischen Gehäuse 4 axiale Anbringung des Drehantriebs können in und/oder an dem Unterteil 3, das beispielsweise einfach als Kreis oder Ringplatte ausgebildet sein kann, Befestigungsbohrungen oder allgemein -einrichtungen (in der Fig. 1 nicht sichtbar) vorgesehen sein. Allgemein können ohne Beschränkung alternativ oder zusätzlich auch Befestigungseinrichtungen im oder am Mantel 2 vorgesehen sein. Die Befestigungseinrichtungen werden passend zur Anwendung gewählt.

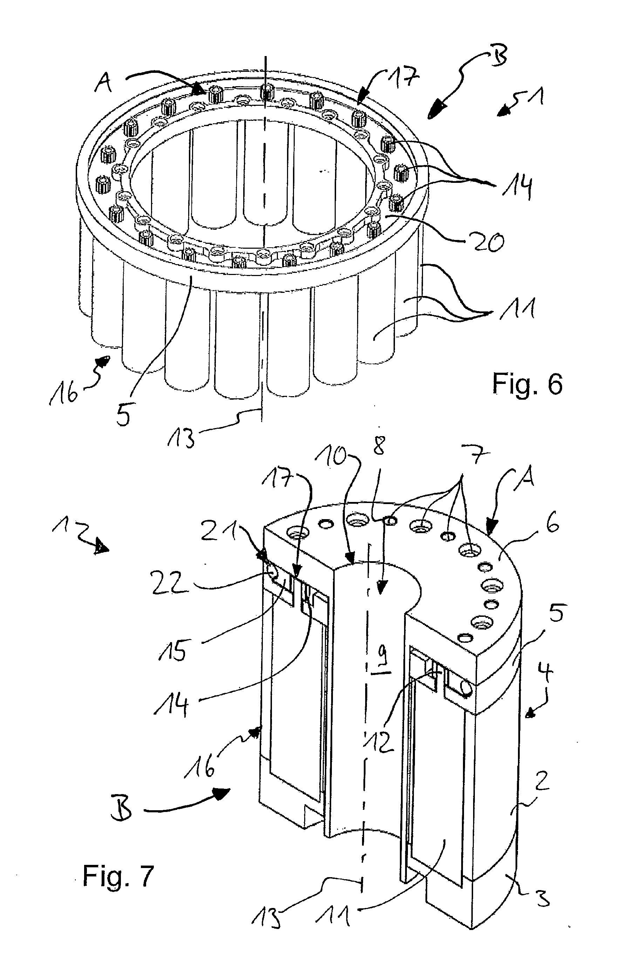

Entgegengesetzt zum Unterteil 3 ist am anderen axialen Ende des Mantels oder Gehäusemantels 4, der auch als Gehäusemittelteil bezeichnet werden kann, ein Haltering 5 angeordnet, an dem eine Mehrzahl von Elektromotoren (in der Fig. 1 nicht sichtbar) angebracht ist, wie später im Zusammenhang mit einem vierten Ausführungsbeispiel gemäß der Fig. 6 näher verdeutlicht wird. Die Mehrzahl von Elektromotoren ist durch das Gehäuse 4, das nicht zwingend zylindrische Form haben muss, wie später anhand weiterer Ausführungsbeispiele gezeigt ist, und/oder den Haltering 5 zusammengefasst, um eine Baueinheit B zu bilden. Das Gehäuse 4 kann mit dem Unterteil 3 und/oder dem Haltering 5 fest verbunden oder integral ausgebildet sein.

Auf der vom Mantel abgewandten Seite des Halterings 5 ist, wie bei dem ersten Ausführungsbeispiel in der Fig. 1 zu erkennen ist, eine Anschlussplatte 6 mit Montagebohrungen 7 vorgesehen, die die Befestigung eines anzutreibenden Teils (nicht dargestellt) ermöglichen. Die Anschlussplatte 6 mit Montagebohrungen 7 ist allgemein Bestandteil von Abtriebseinrichtungen A, die den Elektromotoren nachgeschaltet sind und von allen Elektromotoren gemeinschaftlich beaufschlagt werden. Die Montagebohrungen 7 zur Befestigung eines anzutreibenden Teils (nicht dargestellt) können auch direkt in einem Abtriebszahnkranz (in der Fig. 1 nicht sichtbar) vorgesehen sein. Die Anschlussplatte 6 kann in vorteilhafter Weise gegenüber dem Abtriebszahnkranz und dem Haltering 5 insbesondere zum Verschluss des Gehäuses 4 ausgebildet sein und dienen, so dass dessen Innenraum (in der Fig. 1 nicht sichtbar) vor Umwelteinflüssen, einschließlich Schmutz, geschützt ist.

Ferner ist der Drehantrieb 1 gemäß dem ersten Ausführungsbeispiel mit einer Hohlwelle 8 gestaltet, so dass er als Hohlwellenantrieb eingesetzt werden kann. Allgemein wird die Hohlwelle 8 durch einen Innenzylinder 9 gebildet, der entweder bezüglich einer Drehbewegung von Abtriebszahnkranz (in der Fig. 1 nicht sichtbar) und ggf. Anschlussplatte 6 feststehend mit dem Unterteil 3 verbunden sein kann, was insbesondere auch eingesetzt werden kann, um eine axial ausgerichtete Montage des Drehantriebs 1 zu ermöglichen, oder sich bei der Drehbewegung von Abtriebszahnkranz und ggf. Anschlussplatte 6 mitdrehend mit dem Abtriebszahnkranz und/oder ggf. der Anschlussplatte 6 verbunden sein kann und dann eine Abtriebswelle der Abtriebseinrichtungen A darstellt.

Die Hohlwelle 8 ist, wie in der Fig. 1 zu erkennen ist, durch eine Kreisöffnung 10 in der Anschlussplatte 6 zur dadurch definierten Abtriebsseite des Drehantriebs 1 offen und ermöglicht die Platzierung einer Welle (nicht gezeigt) jedenfalls von dieser Antriebsseite her in der Hohlwelle 8. Zusätzlich oder alternativ kann das Unterteil 3 analog zur Kreisöffnung 10 in der Anschlussplatte 6 eine kreisartige Zentralöffnung (nicht sichtbar) haben, in die die Hohlwelle 8 mündet, um die Platzierung einer Welle (nicht gezeigt) von dem Unterteil 3 her in der Hohlwelle 8 oder die Durchführung einer Welle (nicht gezeigt) durch den gesamten Drehantrieb 1 zu ermöglichen.

In dem Gehäuse 4 sind weitere Komponenten untergebracht, die im Zusammenhang mit einem zweiten Ausführungsbeispiel des Drehantriebs 1 unter Bezugnahme auf die Fig. 2 erläutert werden, in der in einer schematischen perspektivischen Ansicht allgemein weitere Einzelheiten des Grundaufbaus des Drehantriebs 1 des zweiten Ausführungsbeispiels und auch des erste Ausführungsbeispiels gemäß der Fig. 1 veranschaulicht sind.

Der Drehantrieb 1 des zweiten Ausführungsbeispiels gemäß der Fig. 2, wie auch der Drehantrieb 1 des ersten Ausführungsbeispiels gemäß der Fig. 1 innerhalb des Gehäuses 4, enthält eine Mehrzahl von Elektromotoren 11, die mit parallelen Ausgangswellen 12 um eine Zentralachse 13 verteilt angeordnet sind. Ferner ist die Ausgangswelle 12 eines jeden Elektromotors 11 mit einem von letzterem angetriebenen Ritzel 14 versehen. Die Ritzel 14 aller Elektromotoren 11 kämmen mit einem gemeinsamen Abtriebszahnkranz 15, der Bestandteil allgemein der Abtriebseinrichtungen A ist. Der Abtriebszahnkranz 15 kann ggf. einen geringeren Außendurchmesser wie der Außendurchmesser des Mantels 2 haben und damit ggf. vollständig innerhalb des Gehäuses 4 untergebracht sein, kann aber auch denselben Außendurchmesser wie der Mantel 2 des Gehäuses 4 aufweisen und somit im letzteren Fall zusammen mit der Anschlussplatte 6 drehbar aus dem übrigen Gehäuse 4 herausragen. Der Abtriebszahnkranz 15 und die Anschlussplatte 6, die bei dieser Ausführung ebenfalls Bestandteil allgemein der Abtriebseinrichtungen A ist, können auch einstückig ausgebildet sein.

Die Einheit aus der Mehrzahl von Elektromotoren 11, wie z.B. gemäß der Fig. 2 acht Elektromotoren 11, bildet als Gesamtheit einen elektromotorischen Antrieb 16 und kann in dem gemeinsamen Gehäuse 4 des ersten Ausführungsbeispiels untergebracht sein, um dadurch zusammengefasst eine Baueinheit B zu bilden. Es ist aber auch möglich, die Mehrzahl von Elektromotoren 11 anderweitig, d.h. ohne ein gemeinsames Gehäuse 4 in ihren Relativpositionen zueinander zu fixieren, um dadurch den elektromotorischen Antrieb 16 als Baueinheit B zu bilden.

Wie durch die einheitliche Darstellung der einzelnen Elektromotoren 11 in der Fig. 2 symbolisiert ist, handelt es sich bei allen Elektromotoren 11 in der Fig. 2 um baugleiche Elektromotoren, wie insbesondere Asynchronmotoren. Der Haltering 5 ist der Übersichtlichkeit halber in der Darstellung der Fig. 2 weggelassen oder kann auch entfallen, wenn die Zusammenfassung der Elektromotoren 11 zur Baueinheit B durch andere dem Fachmann geläufige Mittel realisiert wird.

Für die Anzahl und Anordnung der Elektromotoren 11 gilt allgemein, dass die Elektromotoren 11 eines elektromotorischen Antriebs 16 bevorzugt gleichmäßig verteilt um die Zentralachse 13 angeordnet sind. Alternativ oder zusätzlich kann auch als allgemeine Regel realisiert sein, dass die Elektromotoren 11 eines elektromotorischen Antriebs 16 vorzugsweise gleichmäßig beabstandet und/oder längs einer Kreislinie konzentrisch um die Zentralachse 13 angeordnet sind, d.h., dass die Ausgangswellen 12 aller Elektromotoren 11 auf einer gemeinsamen Kreislinie liegen. Sollten beispielsweise für bestimmte Leistungskurven des elektromotorischen Antriebs 16 unterschiedliche Elektromotoren mit unterschiedlichen individuellen Elektromotordurchmessern zusammengefasst werden, so würden sie nicht in identischen Abständen und nicht alle auf einer gemeinsamen um die Zentralachse 13 konzentrischen Kreislinie angeordnet sein, damit ihre Ritzel 14 mit dem gemeinsamen Abtriebszahnkranz 15 kämmen können.

Damit sind in dem Drehantrieb 1 der elektromotorische Antrieb 16 mit der Mehrzahl von Elektromotoren 11 und ein Getriebe 17 aus den Ritzeln 14 und dem Abtriebszahnkranz 15 zu einer kompakten Einheit insbesondere mit dem Gehäuse 4 zusammengefasst. Durch diese kombinierte Bauart von Getriebe 17 und elektromotorischem Antrieb 16 mit den Elektromotoren 11 baut die Antriebseinheit in Form des Drehantriebs 1 in vorteilhafter Weise besonders kompakt und kann eine optimal kurze und/oder schlanke Bauform erreicht werden.

In dem Drehantrieb 1 sind somit mehrere einzelne Elektromotoren 11 verbaut. Diese übertragen ihre Leistung jeweils über ein Zahnrad in Form des Ritzels 14 am Abtrieb, d.h. an der Ausgangswelle 12 auf den gemeinsamen Abtriebszahnkranz 15 des Drehantriebs 1. Der gemeinsame Abtriebszahnkranz 15 kann innen- oder außenverzahnt sein und ist dann entsprechend außerhalb bzw. innerhalb der Ritzel 14 angeordnet. Die Leistungen der einzelnen Elektromotoren 11 werden somit zu einer gemeinsamen Ausgangsleistung zusammengefasst.

Der Vollständigkeit halber wird noch darauf hingewiesen, dass bei dem Drehantrieb 1 des zweiten Ausführungsbeispiels in der Fig. 2 deutlich erkennbar ist, dass der Abtriebszahnkranz 15 innenverzahnt ist und, wie anhand der Relation von Form und Position der Gesamtheit der Elektromotoren 11 ersichtlich ist, einen geringeren Außendurchmesser im Vergleich zum Innendurchmesser eines die Gesamtheit der Elektromotoren 11 umgebenden Gehäuses 4 hat/hätte. Der Abtriebszahnkranz 15 bei dem Drehantrieb 1 des zweiten Ausführungsbeispiels läge somit vollständig innerhalb eines Gehäuses 4, wenn der Drehantrieb 1 des zweiten Ausführungsbeispiels mit einem solchen Gehäuse 4 ausgestattet wird. Wie schon erwähnt, ist statt dem in der Fig. 2 gezeigten innenverzahnten Abtriebszahnkranz 15 als Bestandteil der Abtriebseinrichtungen A auch ein außenverzahnter Abtriebszahnkranz oder ein außenverzahntes Stirnrad möglich, das insofern im Rahmen der vorliegenden Unterlagen als eine Bauform für einen Abtriebszahnkranz verstehen ist.

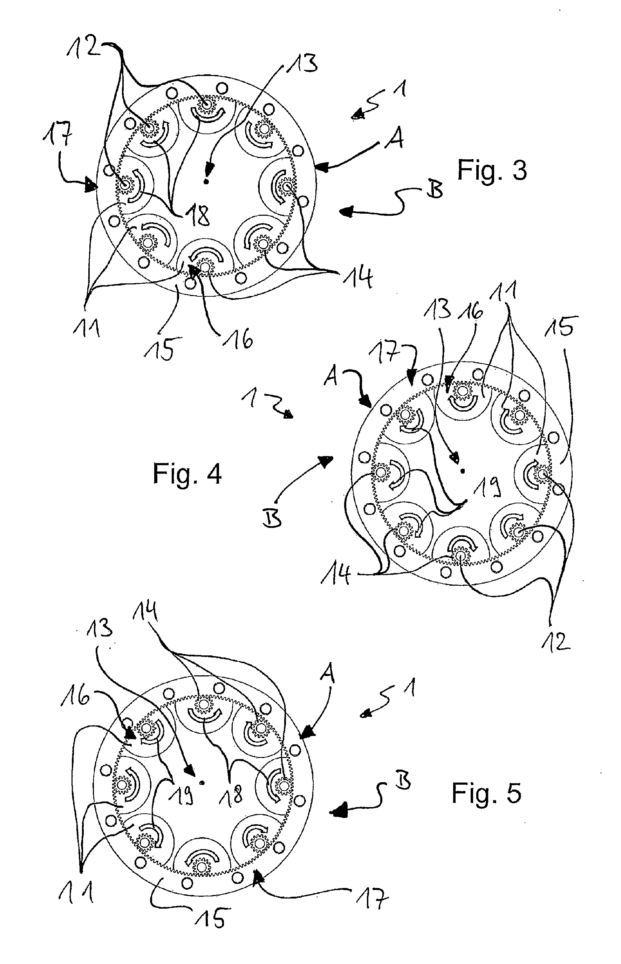

In den Fig. 3 und 4 sind die Funktionsprinzipien des Drehantriebs 1 für links- bzw. rechtsdrehenden Antrieb jeweils für das zweite Ausführungsbeispiel des Drehantriebs 1 gemäß der Fig. 2 gezeigt.

Wie in den Fig. 3 und 4 durch um die Ritzel 14 herum gebogene Pfeile 18 bzw. 19 verdeutlicht ist, drehen die Ausgangswellen 12 und damit die Ritzel 14 aller Elektromotoren 11 in dieselbe Drehrichtung nach links bzw. nach rechts, so dass sich Antriebsleistungen der einzelnen Elektromotoren 11 des elektromotorischen Antriebs 16 addieren. Somit kann als besonderer Vorteil der Erfindung durch Verwendung standardisierter Elektromotoren 11, die kostengünstig in großer Stückzahl hergestellt werden können, ein großer Leistungsbereich an Drehantrieben 1 alleine schon durch einfache Bestimmung und Verwendung der geeigneten Anzahl von Elektromotoren 11 abgedeckt werden, wobei die Verwendung von Elektromotoren 11 mit ausgewählter Leistung - innerhalb des elektromotorischen Antriebs 16 alle mit gleicher Leistung oder auch mit verschiedenen Leistungen - der Leistungsbereich des elektromotorischen Antriebs 16 noch mehr erweitert werden kann. Auch kann der Drehantrieb 1 durch Verwendung von Elektromotoren 11 mit bestimmten Baugrößen leicht an Platzerfordernisse angepasst zusammengestellt werden, wodurch ein weiterer Vorteil der Erfindung erreicht wird.

Die Fig. 5 zeigt ein Ausführungsbeispiel eines Funktionsprinzips des Drehantriebs 1 für einen spielfreien Antrieb ebenfalls anhand des zweiten Ausführungsbeispiels des Drehantriebs 1 gemäß der Fig. 2.

Durch den Einsatz mehrerer Elektromotoren 11 kann ohne weitere mechanische Maßnahmen und Mittel ein Verspannen des Drehantriebs 1, d.h. der Ritzel 14 gegenüber dem Abtriebszahnkranz 15 und somit ein Verspannen innerhalb der Antriebseinrichtugen A oder bei entsprechender Bauart des Getriebes 17 selbst, ermöglicht werden. Dazu werden einzelne der Elektromotoren 11 gleichzeitig in entgegengesetzte Drehrichtungen betrieben, wie die um die Ritzel 14 herum gebogenen Pfeile 18 und 19 verdeutlichen, was durch entgegengesetzte Polung einzelner Elektromotoren 11 gesteuert und erreicht werden kann. Bei n Elektromotoren kann die Spielfreiheit mit dieser Technik bereits durch einen bezüglich allen anderen n-1 Elektromotoren gegenläufig betriebenen Elektromotor erreicht werden. Dies ermöglicht einen spielfreien Drehantrieb 1 und damit eine spielfreie Positionierung der Ausgangsseite, d.h. von Abtriebszahnkranz 15 und ggf. Anschlussplatte 6. Aufgrund dieser Möglichkeit können Zahnräder als Ritzel 14 und als Abtriebszahnkranz 15 mit niedriger Qualität und insbesondere größeren Maßtoleranzen eingesetzt werden, was den Drehantrieb 1 kostengünstiger macht. Eine entsprechende Steuerung ist optional, d.h. dass der erfindungsgemäße Drehantrieb 1 grundsätzlich auch ohne eine derart realisierte Spielfreiheit von Vorteil ist.

In der Fig. 6 sind in einer schematischen perspektivischen Ansicht Einzelheiten des Grundaufbaus eines dritten grundsätzlichen Ausführungsbeispiels eines Drehantriebs 1 veranschaulicht. Es wird nachfolgend nur auf die Merkmale eingegangen, die bei diesem dritten Ausführungsbeispiel anders als bei anderen gezeigten und beschriebenen Ausführungsbeispielen ist, und die in der Darstellung in der Fig. 6 über die Darstellungen in den anderen Figuren hinausgehen. Im Übrigen können alle anderen Merkmale der Erfindung gemäß den übrigen Ausführungsbeispielen auch bei diesem dritten Ausführungsbeispiel realisiert sein.

Beim dritten Ausführungsbeispiel gemäß der Fig. 6 sind statt nur 8 Elektromotoren 11 gemäß dem zweiten Ausführungsbeispiel 18 baugleiche Elektromotoren 11 vorgesehen, die allesamt an dem Haltering 5 so befestigt sind, dass ihre Ausgangswellen 12 durch Öffnungen in einem Flansch 20 des Halterings 5 hindurch gehen und ihre Ritzel 14 über den Flansch 20 des Halterings 5, aber in Axialrichtung selbst nicht über den Haltering 5 vorstehen. Ein Abtriebszahnkranz 15 kann nun innerhalb des Halterings 5 angeordnet werden, und zwar in einer Ausführung mit Innenverzahnung vergleichbar mit dem zweiten Ausführungsbeispiel zwischen Haltering 5 und Ritzeln 14, oder in einer Ausführung mit Außenverzahnung radial innerhalb den Ritzeln 14, jeweils mit den Ritzeln 14 kämmend.

Durch Variation der Anzahl der Antriebs- oder Elektromotoren 11 kann in einem großen Leistungsbereich die gewünschte Leistung erreicht werden. Vorteilhafterweise wird angestrebt, dass in einer gleichen Baureihe immer die gleichen Elektromotoren 11 zum Einsatz kommen und so aufgrund der Herstellung einer gesteigerten Stückzahl die Elektromotoren 11 kostengünstigst bereitgestellt werden können. Aber auch unterschiedliche Bau-/Wicklungslängen der Elektromotoren 11 ermöglichen die Bedienung eines großen Leistungsbereichs auf einfach und kostengünstige Weise.

Wie schon im Zusammenhang mit dem ersten Ausführungsbeispiel gemäß der Fig. 1 erläutert wurde, enthält der Drehantrieb 1 zur Bildung einer Antriebs- oder Baueinheit B ein kompaktes geschlossenes Gehäuse 4, in dem die Elektromotoren 11 untergebracht sind. Dies wird anhand eines vierten Ausführungsbeispiels unter Bezugnahme auf die Fig. 7 verdeutlicht. Die Fig. 7 zeigt in einer schematischen perspektivischen Schnittansicht Einzelheiten des Grundaufbaus des vierten Ausführungsbeispiels des Drehantriebs 1. Es wird nachfolgend nur auf die Merkmale eingegangen, die bei diesem vierten Ausführungsbeispiel anders als bei anderen gezeigten und beschriebenen Ausführungsbeispielen ist, und die in der Darstellung in der Fig. 7 über die Darstellungen in den anderen Figuren hinausgehen. Im Übrigen können alle anderen Merkmale der Erfindung auch bei diesem vierten Ausführungsbeispiel realisiert sein.

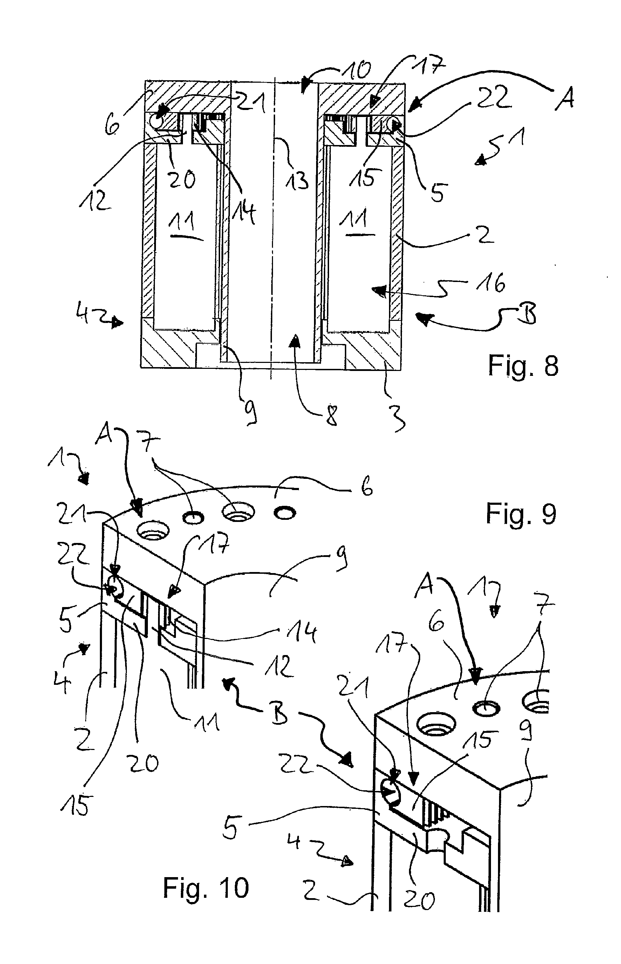

Die Fig. 8, 9 und 10 zeigen weitere Einzelheiten des vierten Ausführungsbeispiels gemäß der Fig. 7 in einer schematischen Schnittansicht bzw. in zwei auszugsweisen schematischen perspektivischen Schnittansichten.

Der Drehantrieb 1 gemäß dem vierten Ausführungsbeispiel enthält als Baueinheit B das Gehäuse 4 mit dem zylindrischen Mantel 2 und dem ringförmigen Unterteil 3 sowie der Anschlussplatte 6, mit der integral der Innenzylinder 9 für die Hohlwelle 8 ausgebildet ist. Die Anschlussplatte 6 ist mit Montagebohrungen 7 zur Befestigung eines anzutreibenden Teils (nicht dargestellt) versehen und ist Bestandteil der Antriebseinrichtungen A.

Im Inneren des Gehäuses 4 und damit der Baueinheit B sind die Elektromotoren 11 kreisartig mit jeweils zueinander parallelen Ausgangswellen 12 zwischen dem Mantel 2 und dem Innenzylinder 9 angeordnet. Die Ausgangswellen 12 der Elektromotoren 11 gehen durch entsprechende Öffnungen (nicht bezeichnet) in dem Haltering 5 hindurch, an dem die Elektromotoren 11 direkt oder indirekt geeignet befestigt sind, und tragen an ihren freien, von den Elektromotoren 11 abgewandten Enden jeweils ein Ritzel 14. Dadurch wird für die Ausgangswellen 12 sowie für den gesamten Drehantrieb 1 eine steife und stabile Lagerung erreicht, so das zur Abstützung solchermaßen aufgebauten Systeme keine zusätzliche Lagerung erforderlich ist.

Nachfolgend wird auf den weiteren konstruktiven Aufbau des Drehantriebs 1 eingegangen. Die Ritzel 14 an den Enden der Ausgangswellen 12 sind in dem Haltering 5 sozusagen "versenkt". Zwischen den Ritzeln 14 und dem Haltering 5 ist der im vorliegenden Fall innenverzahnte Abtriebszahnkranz 15 untergebracht, der ebenfalls nicht über die axiale Ausdehnung des Halterings 5 vorsteht, mit seiner Innenverzahnung mit allen Ritzeln 14 kämmt und am bezüglich der beim Betrieb der Elektromotoren 11 entstehenden Drehbewegung des Abtriebszahnkranzes 15 feststehenden Haltering 5 mittels eines Kugellagers 21 mit Kugeln 22 gelagert ist. An den Haltering 5 schließt sich in Axialrichtung (definiert in allen Figuren der vorliegenden Unterlagen durch den zylindrischen Mantel 2 des Gehäuses 4 sowie den Innenzylinder 9 der Hohlwelle 8 oder einfach durch die Zentralachse 13) die Abschlussplatte 6 an, die, damit sie sich mit dem Abtriebszahnkranz 15 mitdreht, wenn dieser über die Ausgangswellen 12 und Ritzel 14 der Elektromotoren 11 drehangetrieben wird, fest mit dem Abtriebszahnkranz 15 verbunden ist, so dass die Ausgangswellen 12 und Ritzel 14 der Elektromotoren 11 und die Abschlussplatte 6 (bie diesem Ausführungsbeispiel samt Innenzylinder 9) insgesamt die Abtriebseinrichtungen A bilden. Durch die integrale Bauweise von Abschlussplatte 6 und Innenzylinder 9 liegt beim Betrieb des Drehantriebs 1 eine sich entsprechend drehende Hohlwelle 8 vor.

Die Fig. 7 und 8 zeigen denselben Zustand im Schnitt, jedoch einmal perspektivisch und einmal in Frontalansicht. In der Fig. 9 ist speziell der Haltering 5 mit dessen Relation zu Elektromotor 11 und dessen Ausgangswelle 12 und Ritzel 14 sowie dem Abtriebszahnkranz 15 und dem Kugellager 21 gezeigt. Die Fig. 10 zeigt dieselbe teilweise Ansicht wie die Fig. 9, wobei aber in der Fig. 10 gegenüber der Fig. 9 der Elektromotor 11 und dessen Ausgangswelle 12 und Ritzel 14 zugunsten der besseren Sichtbarkeit des innenverzahnten Abtriebszahnkranzes 15 sowie der Kenntlichkeit der Durchführung der Ausgangswelle 12 durch den Haltering 5 (im Vergleich der beiden Abbildungen der Fig. 9 und 10) weggelassen ist. Die Abbildungen machen insbesondere auch deutlich, dass bei diesem vierten Ausführungsbeispiel mit einem innenverzahnten Abtriebszahnkranz 15 der Haltering 5 nicht nur über seinen Flansch 20 der Ausrichtung und Befestigung der Elektromotoren 11 dient, sondern gleichzeitig der äußere Lager- oder Lagerungsring für das Kugellager 21 und damit für den innenverzahnten Abtriebszahnkranz 15 ist.

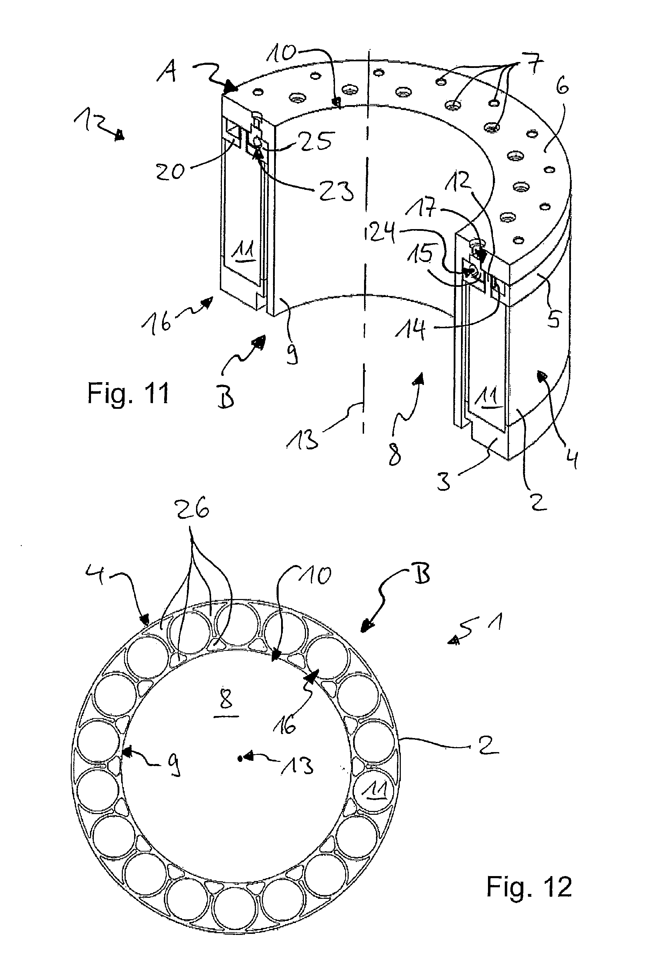

Die Fig. 11 zeigt in einer schematischen perspektivischen Schnittansicht Einzelheiten des Grundaufbaus eines fünften Ausführungsbeispiels eines Drehantriebs 1.

In vergleichbarer Darstellung zur Fig. 7 zeigt die Fig. 11 anhand eines fünften Ausführungsbeispiels eines Drehantriebs 1 eine Version mit einem außenverzahnten Abtriebszahnkranz 15. Der außenverzahnte Abtriebszahnkranz 15 ist über ein Kugellager 23 mit Kugeln 24 an einem Innenzylinderkragen 25 am Flansch 20 des Halterings 5 gelagert. Der Innenzylinderkragen 25 ist entsprechend der Lager- oder Lagerungsring für das Kugellager 23 und damit für den außenverzahnten Abtriebszahnkranz 15 beim fünften Ausführungsbeispiel des Drehantriebs 1 gemäß der Fig. 11.

Ferner sind, wie der Vergleich der Abbildungen der Fig. 7 und 11 zeigt, die Proportionen und Relationen der Abmessungen der einzelnen Komponenten unterschiedlich, was verdeutlicht, dass bei derselben grundsätzlichen Bauart des Drehantriebs 1 der vorliegenden Erfindung unterschiedlichsten Maß- und/oder Leistungsanforderungen Rechnung getragen werden kann. Auf eine wiederholte Beschreibung von Merkmalen, die bei dem fünften Ausführungsbeispiel gemäß der Fig. 11 gleich oder ähnlich den Merkmalen des vierten Ausführungsbeispiels gemäß den Fig. 7 bis 10 sind, wird verzichtet und es wird zur Vermeidung bloßer Wiederholungen betreffend die weiteren Ausgestaltungen beim fünften Ausführungsbeispiel gemäß der Fig. 11 vollumfänglich auf die entsprechenden Ausführungen oben zu den Merkmalen des vierten Ausführungsbeispiels gemäß den Fig. 7 bis 10 verwiesen.

Für sowohl das vierte Ausführungsbeispiel gemäß den Fig. 7 bis 10, als auch das fünfte Ausführungsbeispiel gemäß der Fig. 11 gilt, dass der Lager- oder Lagerungsring gleichzeitig ein Gehäuseteil des Gehäuses 4 des Drehantriebs 1 sein kann, wodurch in vorteilhafter Weise Bauraum eingespart und die Steifigkeit und Stabilität des gesamten Drehantriebs 1 verbessert wird.

Insbesondere bei einem innenverzahnten Abtriebszahnkranz 15 gemäß dem in den Fig. 7 bis 10 gezeigten vierten Ausführungsbeispiel kann auch der Haltering 5 für die Elektromotoren 11 und zum Abschluss des Gehäuses 4 nur aus dem Flansch 20 gebildet sein und kann der innenverzahnte Abtriebszahnkranz 15 denselben Außendurchmesser wie der Mantel 2 des Gehäuses 4 haben und sich in Axialrichtung direkt an den Mantel 2 des Gehäuses 4 anschließen. In einem solchen Fall kann ein Kugellager zur Lagerung des innenverzahnten Abtriebszahnkranzes 15 beispielsweise zwischen diesem und dem Flansch 20 und/oder dem Mantel 2 des Gehäuses 4 vorgesehen sein. Eine ggf. erforderliche axiale Festlegung eines solchen innenverzahnten Abtriebszahnkranzes 15 kann der Fachmann ohne selbst erfinderisch tätig werden zu müssen mit seinem Fachwissen ohne weiteres selbst gestalten.

Wie schon erwähnt wurde, hier aber nochmals betont wird, können der Abtriebszahnkranz 15 und die Anschlussplatte 6 als Bestandteil der Abtriebseinrichtungen A integral ausgebildet sein oder kann der Abtriebszahnkranz 15 direkt eine Ausgestaltung haben, so dass er die Funktion und Wirkung der Anschlussplatte 6 gleich mit erfüllt.

Ferner sind auch Bauarten ohne Kugellager 21 oder 23 oder mit Lagerungen zwischen Abtriebszahnkranz 15 und Flansch 20 und/oder Mantel 2 des Gehäuses 4 möglich. Dabei kann auch vorgesehen werden, dass eine Abstützung des Abtriebszahnkranzes 15 über ein Lager durch entsprechende Führung und Festlegung des Abtriebszahnkranzes 15 nicht erforderlich ist. Lager können insbesondere auch dann entfallen, wenn keine entsprechenden oder besonderen Kräfte von der Abtriebsseite her auf den Abtriebszahnkranz 15 wirken. Bei Bauarten mit Lagern sind diese nicht auf Ausführungen mit Kugellagern beschränkt, sondern können auch Gleitlager, Rollenlager oder Wälzlager eingesetzt werden. Auch diesbezüglich kann der Fachmann ohne selbst erfinderisch tätig werden zu müssen mit seinem Fachwissen ohne weiteres selbst die geeignete Technik auswählen und einsetzen.

Aus Platzspargründen in Radialrichtung des Gehäuses 4 des Drehantriebs 1 kann ein Lager für den Abtriebszahnkranz 15 zwischen letzterem und dem Flansch 20 des Halterings 5 sowohl bei innen- als auch außenverzahnter Ausführung des Abtriebszahnkranzes 15 gewählt werden, wobei dann der Abtriebszahnkranz 15 in geeigneter Weise axial festgelegt wird.

Allgemein ist somit bei den entsprechenden Ausführungsbeispielen des Drehantriebs 1 bedarfsgemäß vorgesehen, dass der Drehantrieb 1 für den Abtriebszahnkranz 15 eine Lagerung beinhaltet, mit der bevorzugt alle Belastung, die aufgrund des aufgebauten Systems bestehend aus Drehantrieb 1 und damit angetriebenen Komponenten im Einsatzfall entstehen, aufgefangen werden können. Vorzugsweise wird angestrebt, dass die Lagerung möglichst steif ausgeführt wird. Lediglich als eine bevorzugte Ausgestaltung wird für eine steife Lagerung der Einsatz eines Vierpunktlagers bzw. eines Kreuzrollenlagers genannt.

Ein Verkippen der Lagerung aufgrund einer Momentenbelastung sollte so gering wie möglich gehalten werden. Vorteilhaft dafür ist es, wenn ein möglichst großer Lagerdurchmesser verwendet wird, was bauartbedingt für eine vom Abtriebszahnkranz 15 getrennte Lagerung am besten und einfachsten mit einem innenverzahnten Abtriebszahnkranz 15 erreicht wird. Dass dies im Zusammenhang mit dem feststehenden Lager- oder Lagerungsring in Form des Halterings 5 als Teil des Gehäuses 4 als besonders platzsparende Lagerlösung möglich ist, wurde bereits erläutert. Ebenso vorteilhaft im Hinblick auf eine platzsparende, kompakte Bauweise wirkt sich aus, wenn der bewegliche Lager- oder Lagerungsring direkt durch den Abtriebszahnkranz 15 als Komponente des Getriebes 17 gebildet ist, wobei entsprechende Vorteile sowohl mit innen- als auch außenverzahntem Abtriebszahnkranz 15 erreicht werden.

Eine Lagerung wird, wie erläutert wurde, somit im Bereich des Getriebes 17 verbaut. Zusätzlich kann zur weiteren Absicherung bei Bedarf gegen ein Verkippen ein zweites Lager im Bereich des zum Getriebe 17 entgegengesetzten axialen Ende des Drehantriebs 1 beispielsweise zwischen Innenzylinder 9 der Hohlwelle 8 und dem Unterteil 3 angebracht werden, wenn der Innenzylinder 9 z.B. mit dem Abtriebszahnkranz 15 verbunden zu den Abtriebseinrichtungen gehört.

Vorzugsweise wird die Ausgangsseite des Drehantriebs 1, also die Elektromotoren 11 im Bereich vor den Ausgangswellen 12 oder ggf. der Mantel 2 des Gehäuses 4 vor dem Abtriebszahnkranz 5 oder der Anschlussplatte 6 sehr massiv extern befestigt oder gelagert, so dass keine weitere externe Lagerungen für die auf dem Drehantrieb 1 aufgebauten oder daran angeschlossenen Einheiten erforderlich sind.

Anhand der Fig. 12 werden in einer schematischen Draufsicht Einzelheiten des Grundaufbaus eines sechsten Ausführungsbeispiels eines Drehantriebs 1 veranschaulicht. Im Unterschied zu den anderen Ausführungsbeispielen ist bei diesem Drehantrieb 1 eine Flüssigkeitskühlung durch Flüssigkeitskanäle 26 im Mantel 2 des Gehäuses 4 der Baueinheit B vorgesehen, um insbesondere die Lebensdauer und den Dauerbetrieb des Drehantriebs 1 zu verbessern. Auf eine wiederholte Beschreibung der übrigen Merkmale des Drehantriebs 1, die bei dem sechsten Ausführungsbeispiel gemäß der Fig. 12 gleich oder ähnlich den Merkmalen des ersten bis fünften Ausführungsbeispiele gemäß den Fig. 1 bis 11 sein können, wird verzichtet und es wird vollumfänglich auf die entsprechenden Ausführungen oben zu diesen Merkmalen verwiesen.

Bei dem Drehantrieb 1 gemäß der vorliegenden Erfindungen können ferner beispielsweise ein Messsystem zur Lage- oder Positionsbestimmung (z.B. Drehwinkel der Abtriebseinrichtungen A oder der Ausgangswellen 12 der Elektromotoren 11) und/oder eine Abdichtung des Gehäuses 4 vorgesehen sein, um den Drehantrieb insbesondere für den Einsatz in der Lebensmittelindustrie geeignet zu machen. Im Präzessionsbereich werden mit Vorzug Befestigungen des Drehantriebs und/oder Lager in dem Getriebe 17 mit Vorspannung eingesetzt.

Das Gehäuse 4 ist bei jeglicher erfindungsgemäßer Bauart mit Vorteil im Hinblick auf seine Steifigkeit aufgrund seiner Wandstärker so dimensioniert, dass keine weitere zusätzliche externe Lagerung bzw. Lagerwelle für den Drehantrieb 1 erforderlich ist. Die Belastung des aufgebauten Systems aus Drehantrieb 1 und davon angetriebenen Komponenten kann direkt über den Drehantrieb 1 in die Grundstruktur des Montageortes des Drehantriebs 1 eingeleitet werden.

Wie anhand der bisherigen Beschreibung deutlich wurde, liegt ein besonderer Vorteil des Drehantriebs 1 in der Verwendung einer Baueinheit B mit einer Mehrzahl von Elektromotoren 11, die gemeinschaftlich auf einen gemeinsamen Abtriebszahnkranz 15 oder allgemein Abtriebseinrichtungen A wirken. Damit kann vorteilhafterweise ein Baukastensystem realisiert werden. Die Gesamtleistung des Drehantriebs 1 wird durch die Einzelleistungen der Mehrzahl von Elektromotoren 11 und deren Anzahl festgelegt. Vorteilhafterweise kommen in einer Baureihe gleiche Motoren, insbesondere Asynchronmotoren, zum Einsatz, wodurch infolge der entsprechenden Stückzahl bei der Herstellung niedrigere Kosten für die einzelnen Elektromotoren 11 und damit den gesamten Drehantrieb 1 erreicht werden können.

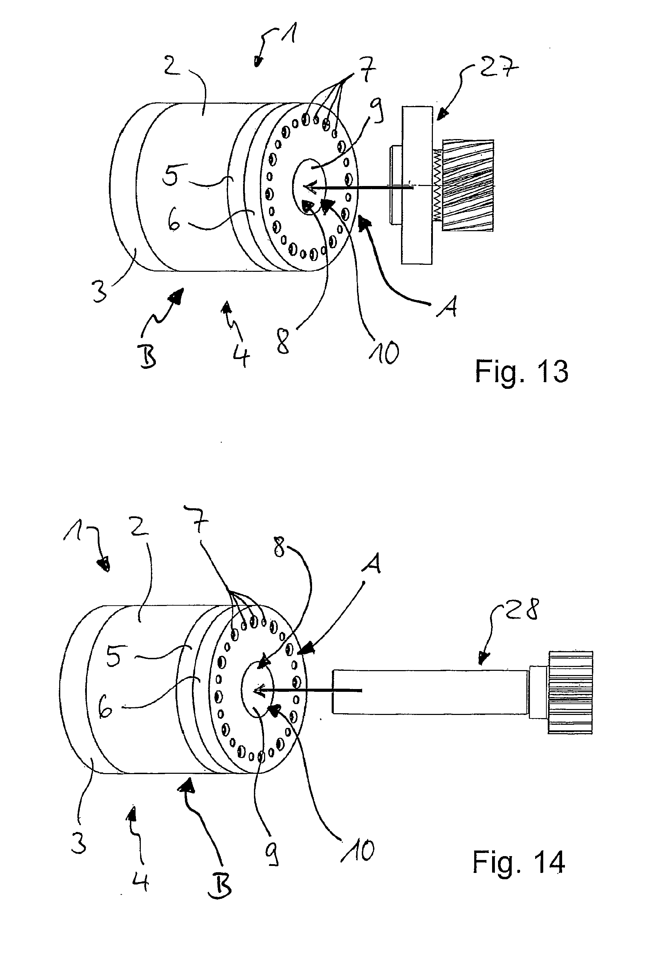

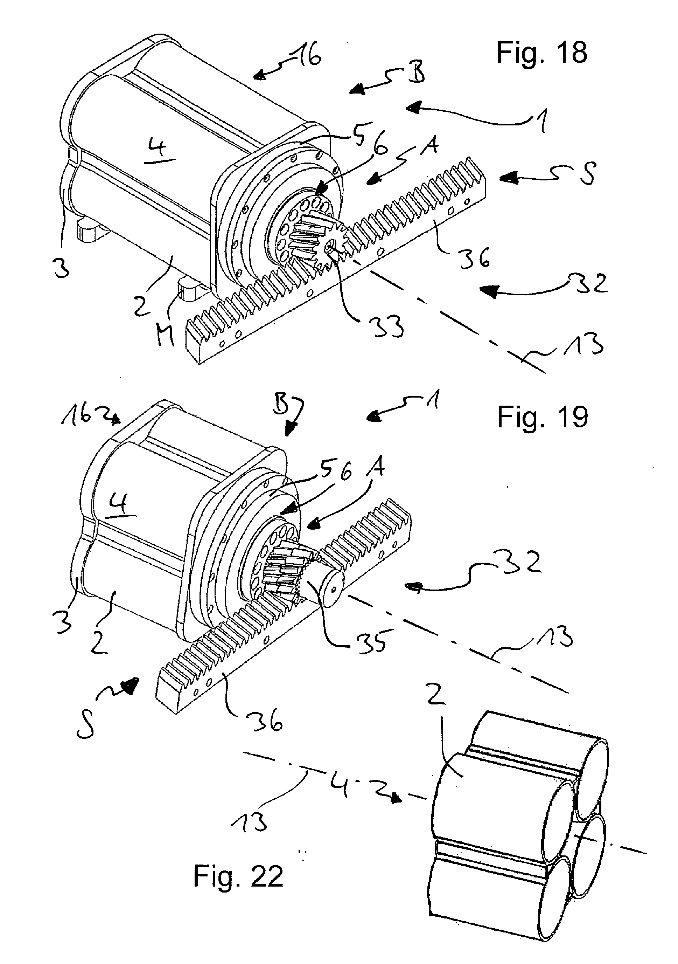

Erfindungsgemäße Drehantriebe 1 können beispielsweise und mit Vorteil als Zahnstangenantriebe (siehe später im Zusammenhang mit den Fig. 18 und 19) eingesetzt werden. Eine andere Verwendung des erfindungsgemäßen Drehantriebs 1 besteht in Kombination mit großen Stirnrädern für u.a. Drehverbindungen (in den Fig. nicht dargestellt). Durch einen Aufbau mit einem Flanschritzel 27 an der Anschlussplatte 6, wie als siebtes Ausführungsbeispiel in der Fig. 13 schematisch in einer perspektivischen Darstellung einer beispielsweise spielfreien Bauart veranschaulicht ist, oder Einsetzen einer Ritzelwelle 28 in die Hohlwelle 8, wie als achtes Ausführungsbeispiel in der Fig. 14 schematisch in einer perspektivischen Darstellung veranschaulicht ist, lassen sich solche Anwendungen einfach und zuverlässig realisieren.

In Kombination mit einer Steuerung der Elektromotoren 11 für einen spielfreien Betrieb gemäß der Beschreibung zur Fig. 5 kann auf einfache Weise z.B. ein Zahnstangenantrieb auch spielfrei realisiert werden, ohne durch zusätzliche Masse leistungs- und energiezehrende Mechaniken zu diesem Zweck zu benötigen. In derselben Weise kann auch ein spielfreier Antrieb von Stirnrädern vorteilhaft mit dem Drehantrieb 1 der vorliegenden Erfindung realisiert werden.

Vorstehend wurden als vorzugsweise Ausgestaltungen und im Rahmen von Ausführungsbeispielen Drehantriebe 1 mit einer Mehrzahl von baugleichen Elektromotoren 11 angegeben. Dies beinhaltet insbesondere explizit auch, dass ein erfindungsgemäßer Drehantrieb 1 auch eine Mehrzahl von Elektromotoren 11 enthalten kann, die nicht alle baugleich sind. Bei den in einem Drehantrieb 1 verbauten Elektromotoren 11 können auch Unterschiede in der Bauform, bei der Ausstattung bei den Leistungsdaten und/oder bei den Eigenschaften bestehen. Einer oder mehrere von den Elektromotoren 11 eines Drehantriebs 1 kann/können anders sein als ein oder mehrere der übrigen Elektromotoren 11 dieses Drehantriebs 1.

So kann zum Beispiel ein Elektromotor 11 in einer oder in beiden Drehrichtung(en) mit einem zusätzlichen Drehgeber (nicht gezeigt) ausgestattet sein, der von einigen Motorherstellern als Resolver bezeichnet wird und mittels dem eine Rückmeldung zur Steuerung erhalten werden kann. Alternativ oder zusätzlich kann einer oder können mehrere der Elektromotoren 11 mit einem Temperaturüberwachungsschalter (nicht gezeigt) ausgestattet sein. Zusammengefasst kann/können somit einer oder mehrere der Elektromotoren 11 eines Drehantriebs 1 bezüglich dem oder den übrigen Elektromotor(en) 11 dieses Drehantriebs 1 verschieden sein, und zwar hinsichtlich Bauform, Ausstattung, Leistung und/oder sonstigen Eigenschaften. Die Gestaltung ist auch nicht auf die Verwendung von zwei unterschiedlichen Arten von Elektromotoren 11 bei einem Drehantrieb beschränkt.

Der Vollständigkeit halber wird auch noch darauf hingewiesen, dass bei den entsprechenden Ausführungsbeispielen der Halterring 5 mit dem zylindrischen Mantel 2 ein gemeinsames, insbesondere integrales Bauteil sein kann, und/oder dass der Mantel 2 mit dem Unterteil 3 ein gemeinsames, insbesondere integrales Bauteil sein kann. Außerdem kann das Gehäuse 4 auch anders als aus Mantel, Unterteil und Haltering aufgebaut sein. Der Mantel muss nicht zylindrisch sein und kann z.B. auch in Längs- und/oder Querrichtung geteilt sein

Der erfindungsgemäße Drehantrieb 1 erfüllt auch den Bedarf an Direktantrieben, wie sie z.B. auch im Bereich der Zahnstangenantriebe immer häufiger eingesetzt werden. Dazu schafft der erfindungsgemäße Drehantrieb insbesondere eine kompakte Antriebs- oder Baueinheit B, die bei bevorzugten Ausgestaltungen nicht nur den elektromotorischer Antrieb 16 mit den Elektromotoren 11, sondern auch gleich noch die Getriebeeinheit 17 der Abtriebseinrichtungen A in der Baueinheit B kombiniert. Dabei ermöglicht der erfindungsgemäße Drehantrieb 11 insbesondere auch die kraftvolle und genaue Positionierung des Antriebes.

Der neuartige erfindungsgemäße Drehantrieb 1 ermöglicht beispielsweise als Zahnstangenantrieb eine höchst kraftvolle genaue Positionierung. Im gemeinsamen Einsatz mit einem spielfreien Stirnrad oder einer Steuerung der Elektromotoren mittels Gegenläufigkeit zur Spielfreiheit besteht sogar die Möglichkeit, den kompletten Antriebsstrang durchgehend spielfrei zu halten. Natürlich kann der Antrieb aber auch mit einem gewöhnlichen Standard-Stirnrad betrieben werden.

Bei bevorzugten Ausführungsformen
- sind im Inneren eines Gehäuses oder einer Gehäusekombination des Drehantriebs 1 mehrere Elektromotoren 11 verbaut; diese bündeln ihre Leistung auf gemeinsame Abtriebseinrichtungen A, wie z.B. eine gemeinsame Ausgangswelle,
- wird die Leistung der einzelnen Elektromotoren 11 somit zu einer gemeinsamen Ausgangsleistung zusammengefasst,
- werden z.B. in einem Drehantrieb 1 als Zahnstangenantrieb vier Elektromotoren 11 verbaut,
- kann durch geeignete Wahl von Ritzeln 14 und Abtriebszahnkranz 15, der innenverzahnt oder außenverzahnt, d.h. als Zahnrad gestaltet sein kann, eine geforderte Übersetzung/Untersetzung eines daraus gebildeten Getriebes 17 realisiert werden, das Bestandteil der gemeinsamen Abtriebseinrichtungen A des Drehantriebs 1 und vorzugsweise auch Bestandteil der Baueinheit B des Drehantriebs 1 ist,
- kann zusätzlich das mit dem Drehantrieb 1 erzielbare Drehmoment durch Auswahl unterschiedlicher Übersetzungen in dem Getriebe 17 je nach Kundenwunsch angepasst werden, und/oder
- wird die Motor- und Getriebeeinheit, d.h. der elektromotorische Antrieb 16 und das Getriebe 17, in einem gemeinsamen Gehäuse 4 oder einem Verbund von Einzelgehäusen zu einer Baueinheit B zusammengepackt; dies ermöglicht eine höchst kompakte platzsparende Bauform.

Mit besonderem Vorteil können bei weiteren bevorzugten Ausgestaltungen des erfindungsgemäßen Drehantriebs 1 geeignete Ansteuerungen der einzelnen Elektromotoren 11 realisiert werden. Durch offene Automatisierungsplattformen hat der Anwender die Möglichkeit, eigenes Maschinen-Know-How zu integrieren. CNC-Programme in DIN66025-Sprache (G- / M-Befehle) können z.B. in mehreren unabhängigen Kanälen ablaufen. Beispielsweise können SPS- / Motion Control- und Visualisierungsfunktionen mit CoDeSys V3 programmiert werden. So lassen sich z.B. über die Steuerung smmx auch Touch-Panel- und WEB-Visualisierungen realisieren.

Bei bevorzugten Ausführungsformen der Ansteuerungen kann vorgesehen sein:
- hinsichtlich der Auswahl der Steuerungskomponenten kann es sich um handelsübliche Frequenzumrichter handeln,
- hinsichtlich der Auswahl der Steuerungskomponenten kann es sich z.B. um die Standardsteuerung smmx von der Firma SM Motion Control http://www.smmotioncontrol.de/produkte/steuerungen/smmx handeln, eine frei programmierbare einfache Steuerung, die eine ständige Ist-Soll-Wert-Abfrage hinsichtlich der Winkellage/Drehlage von Motor(en) und/oder Wellen/Ritzeln/Zahnrädern durchführt und direkt beispielsweise einen Frequenzumrichter ansteuert, der dann die Motoren mit Strom beaufschlägt, falls der Drehwinkel korrigiert werden soll,
- passende Regler-Parameter können im Rahmen der Programmierung der Steuerung eingestellt werden, wobei vorzugsweise eine Steuerungsmaske vorgesehen ist, mit der der Anwender im Einrichtbetrieb des Drehantriebs 1 die Parameter verstellen kann; damit kann eine Art mathematische Beziehung zwischen einer Eingangsgröße (z.B. Winkelsensor am Antrieb) und einer Ausgangsgröße an der Steuerung (z.B. Ansteuerung eines Frequenzumrichters) beschrieben werden, und/oder die Regelparameter können vom Verhalten des Gesamtsystems (z.B. bewegte Masse, Massenträgheiten etc.) abhängig sein und/oder können je nach Kundenanwendung speziell angepasst werden,
- zwei Frequenzumrichter können unterschiedlich von der Steuerung angesteuert werden, um den Drehantrieb 1 für eine Spielfreiheit ansteuern und einen entsprechenden RegelAlgorithmus durchführen zu können, den die Steuerung in einem solchen Fall realisiert,
- die einzelnen Elektromotoren 11 werden gleichmäßig belastet,
- das Gesamtdrehmoment wird auf alle Elektromotoren 11 synchron verteilt, und/oder
- alle Elektromotoren 11 haben zusammen einen gemeinsamen Frequenzumrichter.

Vorzugsweise handelt es sich bei den Elektromotoren 11 um asynchrone Elektromotoren oder Asynchronmotoren. Versuche haben ergeben, dass alle Motoren dann eine gleichmäßige Stromaufnahme haben und das System auf einfach und kostengünstige Weise funktioniert. Synchronmotoren, Servomotoren etc. würden zum Funktionieren aufwendigere Steuerungen erfordern.

Gemäß weiteren bevorzugten Ausführungsbeispielen wird an der Ausgangs- oder Abtriebswelle des elektromotorischen Antriebes 16, oder an einer anderen geeigneten Komponente der Abtriebseinrichtungen A mit einem handelsüblichen Winkelsensor die Position, d.h. die Winkel(ein)stellung gemessen. Die ist aber nicht zwingend notwendig, sondern es kann z.B. auch ein Linearmesssystem an einzelnen Verfahrachsen, welche ein Zahnstangenantrieb mit dem Drehantrieb antreibt, zur Positionserfassung für die Steuerung des Drehantriebs 1 als Ist-Wert-Erfassung eingesetzt werden. Ganz allgemein kann jegliche Realisierung einer Lagerregelung zum Einsatz kommen.

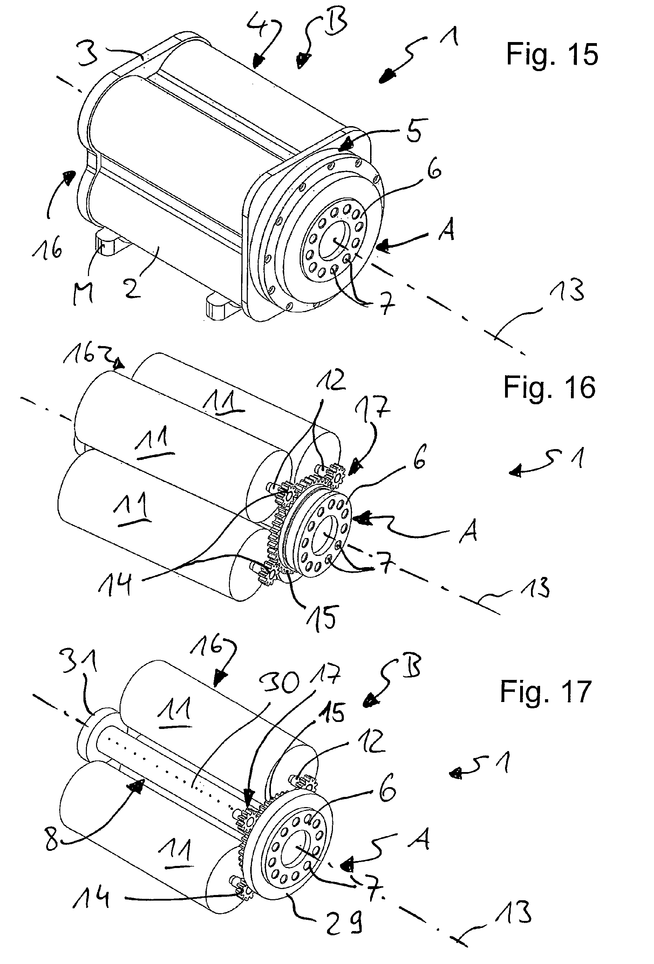

In den Fig. 15 bis 22 sind weitere Ausführungsbeispiele des erfindungsgemäßen Drehantriebs gezeigt. Durch Vergleich mit den Fig. 1 bis 14 sind auch die entsprechenden Komponenten und Merkmale in den Fig. 15 bis 22 eindeutig zu erkennen, auch ohne Bezugszeichen. Dasselbe gilt für die nachfolgend beschriebenen Angaben zu den Fig. 15 bis 22. Insbesondere bezeichnen jedoch gleiche Bezugszeichen in den Fig. 15 bis 22 gleiche oder gleichwirkende Bauteile, Elemente oder Komponenten aus den Fig. 1 bis 14 und auf die entsprechenden Beschreibungen vorher wird zur Vermeidung bloßer Wiederholungen vollumfänglich Bezug genommen. Soweit sich Bauteile, Elemente oder Komponenten in den Fig. 15 bis 22 von denselben Bauteilen, Elementen oder Komponenten in den Fig. 1 bis 14 unterscheiden, sind diese Unterschiede nachfolgend angegeben oder erläutert.

Die Fig. 15 zeigt eine Gesamtansicht eines weiteren neunten Ausführungsbeispiels des erfindungsgemäßen Drehantriebs 1 mit dem Gehäuse 4 und der Anschlussplatte 6, die repräsentativ für die Abtriebseinrichtungen A sichtbar ist. Im Vergleich zu den Ausführungsbeispielen in den Fig. 1, 7, 8, 9, 10, 11, 12, 13 und 14 hat das Gehäuse 4 dieses Drehantriebs zur Bildung der Baueinheit B keinen zylindrischen Mantel, sondern einen Mantel 2, der aus vier parallel ausgerichteten und ineinander übergehenden Zylindermantelflächenteilen besteht, von denen jeder geeignet und passen ist, genau einen Elektromotor 11 (vergleiche Fig. 16 und 17) zu umgeben. Auf die genaue Form des Gehäuses 4 und insbesondere des Mantels 2 kommt es für die Realisierung und Nutzung der Vorteile des erfindungsgemäßen Drehantriebs 1 nicht an. Es ist aber vorteilhaft, wenn das Gehäuse 4 möglichst raumsparend insbesondere im Hinblick auf die Anwendungsumgebung des Drehantriebs 1 und/oder auf z.B. Kühlungserfordernisse des Drehantriebs 1, wie z.B. mit Kühlrippen (nicht gezeigt), gestaltet ist. In der Fig. 15 sind noch Montagefüße M lediglich als Beispiel zum Anbringen oder Aufstellen des Drehantriebs 1 zu erkennen.

In der Fig. 16 sind die Elektromotoren 11 des Drehantriebs 1 aus der Fig. 15 mit den Ritzeln 14 und dem Abtriebszahnkranz 15 als Bestandteile der Abtriebseinrichtungen A zu sehen. Bei der Ansicht der Fig. 17 sind im Vergleich zu der Ansicht der Fig. 16 ein Elektromotor 11 weggelassen und ein anderer Abtriebszahnkranz 15 montiert, der eine Seite einer Vorderseitenlagerscheibe 29 einer durch den Drehantrieb 1 hindurch gehenden Abtriebswelle 30 bildet, die auf der dem Abtriebszahnkranz 15 entgegengesetzt liegenden Seite des Drehantriebs 1 eine Rückseitenlagerscheibe 31 aufweist, so dass eine Hohlwellenkonstruktion realisiert ist, durch die die Abtriebswelle 30 hindurch geht. die Lager für die Vorderseitenlagerscheibe 29 und die Rückseitenlagerscheibe 31 sind der Übersichtlichkeit halber und, da dem Fachmann solcher Lager ohne weiteres bekannt sind, weggelassen.

Die Fig. 18 zeigt einen Zahnstangenantrieb 32 mit einem Drehantrieb 1 beispielsweise gemäß der Fig. 15 mit einem normalen, d.h. nicht für Spielfreiheit sorgenden Stirnrad 33. Ein Zahnstangenantrieb 34 mit einem Drehantrieb 1, der ein für Spielfreiheit sorgendes Stirnrad 35 hat, ist in der Fig. 19 gezeigt, so dass ein komplett durchgehender spielfreier Antriebsstrang S realisiert werden kann, wobei bei dem Ausführungsbeispiel, das in der Fig. 19 gezeigt ist, das Gehäuse 4 und entsprechend die darin untergebrachten Elektromotoren 11 kürzer als bei der Ausgestaltung nach der Fig. 18 sind und damit wegen der entsprechend kürzeren Wicklung der Elektromotoren 11 weniger Leistung haben, d.h., dass alleine durch die Länge der Bauart die Leistung vorgegeben werden kann. Der Zahnstangenantrieb 32 und 24 kann insofern auch als eine Abwandlung oder Weiterführung des einfachen Drehantriebs 1 angesehen werden. In den Fig. 18 und 19 ist entsprechend auch jeweils eine Zahnstange 36 gezeigt, mit denen das jeweilige Stirnrad 33 bzw. 35 kämmt.

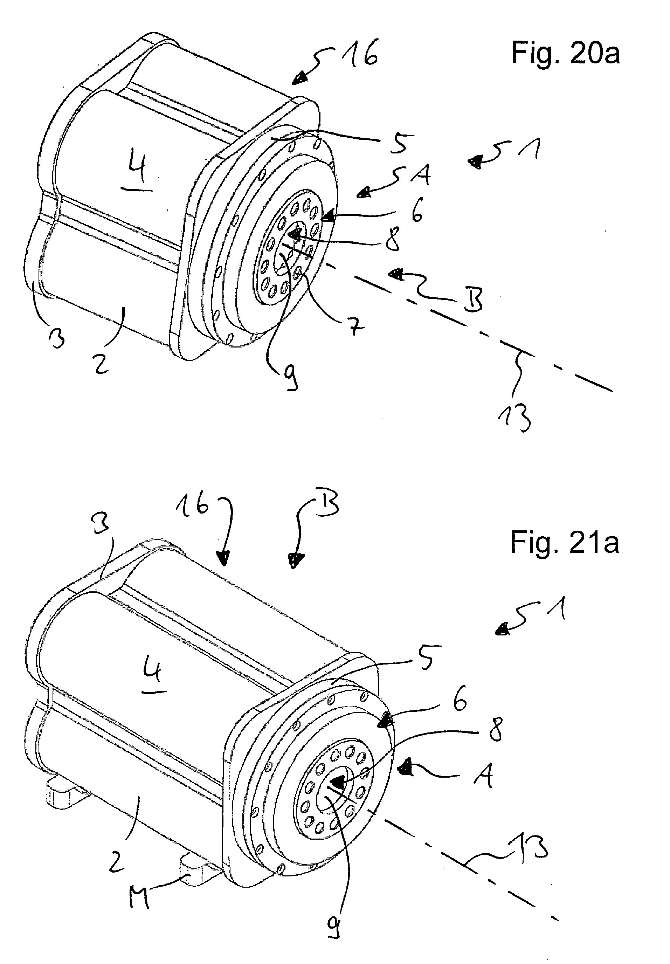

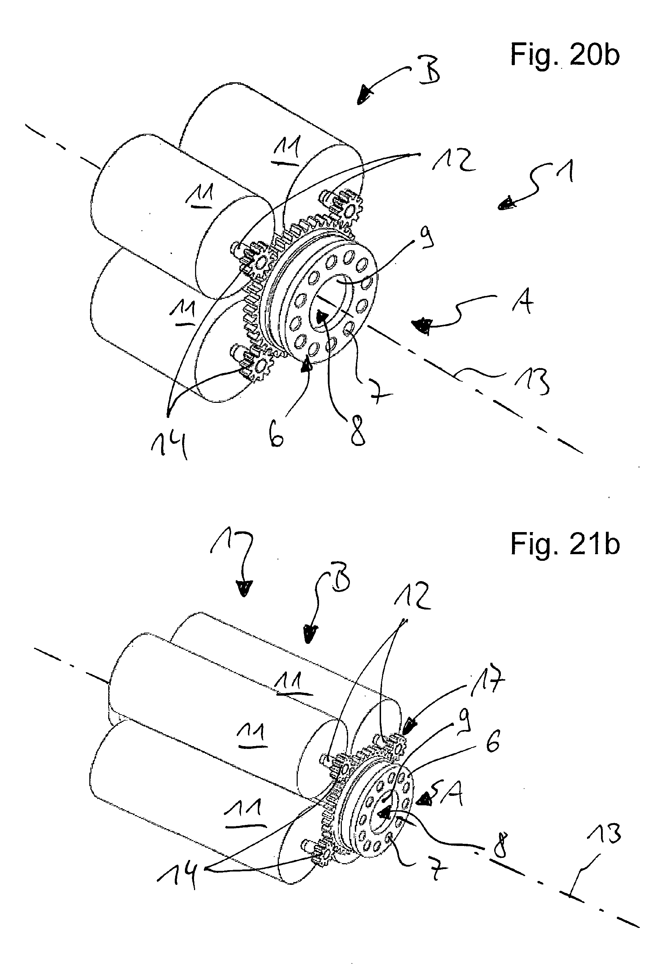

Die Darstellungen in den Fig. 20a/21 a und 20b/21 b entsprechen den Darstellungen in den Fig. 15 und 16 und zeigen Drehantriebe 1 mit unterschiedlichen Leistungswerten alleine aufgrund ihrer unterschiedlichen Baulängen, d.h. konkret aufgrund der unterschiedlichen Wicklungslängen für die jeweils verwendeten Elektromotoren 11.

Die Fig. 22 zeigt in Alleinstellung perspektivisch ein Beispiel eines Gehäusemantels 2, der nicht einfach zylindrisch ist, wie bei der Ausführung nach der Fig. 1, sondern aus mehreren Einzelzylindern besteht, die miteinander verbunden sind und keinen gemeinsamen Innenraum für alle Elektromotoren 11 zusammen definieren, sondern für jeden Elektromotor 11 einen eigenen Aufnahmeraum bereitstellen, so dass die Elektromotoren keine eigenen Einzelgehäuse mehr benötigen würden. Alternativ könnten auch einzelne Teilzylinder verwendet werden, die ineinander übergehen und einen gemeinsamen Innenraum für alle Elektromotoren 11 bilden. Jede dieser beiden Gehäusegestaltungen kann bei den Ausführungsbeispielen gemäß den Fig. 15, 18, 19, 20a und 21 a eingesetzt sein.

Der Drehantrieb 1 wird vorzugsweise so konzipiert, dass in einer Baureihe oder aus einem Bausatz nur die Länge der Elektromotoren 11 oder genauer deren Wicklungen geändert wird. Durch die unterschiedlich langen Wicklungslängen bei Elektromotoren 11 verschiedener Drehantriebe 1 können alleinig dadurch bei ansonsten gleichen Bauarten verschiedene Leistungen realisiert werden. Diese Wicklungen sind in den Fig. der Zeichnung nicht gesondert dargestellt, da sie einem Fachmann ohne weitere bekannt und klar sind.

Alle Teile an der Vorderseite des Drehantriebes 1, wo die Getriebeeinheit oder das Getriebe 17 unter Zusammenfassung der Elektromotoren 11 liegt, also gemäß de Ausführungsbeispielen der Haltering 5 sowie die Rückseite (Unterteil 3) (vergleiche Fig. 1, 7, 8, 9, 10, 11, 13 und 14 sowie 15, 18, 19, 20a und 21a) bleiben bei solchen Ausführungen gleich. Also werden nur unterschiedliche Motorlängen oder Längen von Elektromotoren 11, d.h. von Elektromotoren 11 mit unterschiedlich langen Wicklungen, verbaut. Es versteht sich von selbst, dass die Länge des Mantels 2 des Gehäuses 4 jeweils angepasst werden muss, was auch für ein eventuell vorhandenes jeweils individuelles Gehäuse jedes einzelnen Elektromotors 11 gilt. Zusätzlich kann je nach Kundenanforderung auch noch die Übersetzung der Getriebeeinheit oder des Getriebes 17 angepasst werden.

Soweit die Ausführungsbeispiele der Drehantriebe 1 in den Figuren mit Abgangswellen als ISO-Flansch dargestellt sind, ist dies nicht beschränkend. Natürlich ist beispielsweise auch ein Wellenstumpel mit Passfedernut oder Verzahnung etc. möglich. Auch kann die Welle als Hohlwelle ausgeführt werden. Ferner ist es von Vorteil, die Abtriebswelle steif zu lagern.

Der Drehantrieb 1 kann sowohl mit einer Luftkühlung, als auch mit einer Wasserkühlung realisiert werden.

Ferner kann ein gesondertes Positionsmesssystem mit dem Drehantrieb kombiniert oder in diesen integriert werden und damit eine Positionsbestimmung und Positionseinstellung realisiert werden. Die Positionsbestimmung kann dabei an dem Drehantrieb nachgeschalteten Mechanikkomponenten, am Abtriebszahnrad oder an der Abtriebswelle des Drehantriebs oder an einem oder mehreren der zusammengefassten Motoren erfolgen und ggf. über eine Motorsteuerung, von der vorstehend bereits einige beispielsweise oder bevorzugte Ausgestaltungen erläutert wurden, zur Positionseinstellung dienen.

Generell gesprochen liegt die Hauptinovation des Drehantriebs 1 darin, das es sich um einen elektromotorischen Antrieb 16 handelt, der mehrere einzelne gemeinsam wirkende Elektromotoren 11 zur Bildung eines einheitlichen kompakten elektromotorischen Antriebs 16 in einer Baueinheit B insbesondere in einem gemeinsamen Gehäuse 4 oder Gehäuseverbund enthält.

Mit besonderem Vorteil kann der erfindungsgemäße Drehantrieb 1 als ein Baukastensystem bereitgestellt werden, was besonders wirtschaftliche Realisierungen ermöglicht. In diesem Baukastensystem gibt es auf einfache Weise unterschiedliche Größen und Varianten des Drehantriebs 1. Varianten wie zum Beispiel verschiedene Bauformen für die Abtriebswelle oder andere Komponenten der Abtriebseinrichtungen A werden im Baukastensystem als Standardlösungen angeboten. Für insbesondere kürzere Bauformen oder spezielle Anbringungserfordernisse besteht auch die Möglichkeit des Einsatzes einer Hohlwelle.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele entnehmen und mit seinem fachmännischen Wissen sowie dem Stand der Technik kombinieren kann. Insbesondere sind alle einzelnen Merkmale und Ausgestaltungsmöglichkeiten der Erfindung kombinierbar.

## Patentansprüche

1. Drehantrieb (1) mit einem elektromotorischen Antrieb (16), der auf Abtriebseinrichtungen (A) wirkt, an denen eine Antriebswirkung des elektromotorischen Antriebs (16) abnehmbar ist, **dadurch gekennzeichnet, dass** der elektromotorische Antrieb (16) eine Mehrzahl von Elektromotoren (11) enthält, die zu einer Baueinheit zusammengefasst sind, und dass alle Elektromotoren (11) der Mehrzahl von Elektromotoren (11) gemeinschaftlich an den Abtriebseinrichtungen (A) angreifen, die den Elektromotoren (11) nachgeschaltet sind.

2. Drehanatrieb (1) nach Anspruch 1, **dadurch gekennzeichnet, dass** die Mehrzahl von Elektromotoren (11) vier Elektromotoren (11) enthält und/oder im Betrieb die Abtriebseinrichtungen (A) gemeinschaftlich beaufschlagen.

3. Drehantrieb (1) nach Anspruch 1 oder 2, **dadurch gekennzeichnet, dass** der elektromotorische Antrieb (16) eine Mehrzahl von baugleichen Elektromotoren (11) und/oder asynchronen Elektromotoren (11) enthält.

4. Drehanatrieb (1) nach einem der vorhergehenden Ansprüche, **dadurch gekennzeichnet, dass** die Elektromotoren (11) der Mehrzahl von Elektromotoren (11) mit parallelen Ausgangswellen (12) um eine Zentralachse (13) verteilt angeordnet sind, und dass die Ausgangswelle (12) eines jeden Elektromotors (11) mit einem von letzterem angetriebenen Ritzel (14) versehen ist, die Bestandteil der Abtriebseinrichtungen (A) sind, und die Ritzel (14) aller Elektromotoren (11) mit einem gemeinsamen Abtriebszahnkranz (15) der Abtriebseinrichtungen (A) kämmen.

5. Drehanatrieb (1) nach Anspruch 4, **dadurch gekennzeichnet, dass** die Mehrzahl von Elektromotoren (11) gleichmäßig verteilt und/oder gleichmäßig beabstandet und/oder längs einer Kreislinie konzentrisch um die Zentralachse (13) angeordnet sind.

6. Drehanatrieb (1) nach Anspruch 4 oder 5, **dadurch gekennzeichnet, dass** die Ritzel (14) und der Abtriebszahnkranz (15) der Abtriebseinrichtungen (A) ein Getriebe (17) mit vorgebbarer Über- oder Untersetzung bilden.

7. Drehanatrieb (1) nach einem der Ansprüche 4 bis 6, **dadurch gekennzeichnet, dass** der gemeinsame Abtriebszahnkranz (15) aller Elektromotoren (11) über ein Kugellager (21; 23) gelagert ist.

8. Drehanatrieb (1) nach einem der vorhergehenden Ansprüche, **dadurch gekennzeichnet, dass** eine Steuerung zum Steuern der Gesamtheit der Elektromotoren (11) enthalten ist.

9. Drehanatrieb (1) nach Anspruch 8, **dadurch gekennzeichnet, dass** für die Gesamtheit der Elektromotoren (11) ein gemeinsamer Frequenzumrichter enthalten ist, der von der Steuerung angesteuert wird.

10. Drehanatrieb (1) nach Anspruch 8, **dadurch gekennzeichnet, dass** für die Gesamtheit der Elektromotoren (11) zwei Frequenzumrichter enthalten sind, die von der Steuerung unterschiedlich angesteuert werden, um eine Spielfreiheit des Drehantriebs (1) zu gewährleisten.

11. Drehanatrieb (1) nach einem der Ansprüche 8 bis 10, **dadurch gekennzeichnet, dass** wenigstens ein Positions-, Winkel- oder Lagesensor enthalten ist, der mit der Steuerung zur Ist-Wert-Übertragung gekoppelt ist, und dass die Steuerung ausgelegt ist, die Elektromotoren (11) in Abhängigkeit von wenigstens einem Ist-Wert und wenigstens einem festlegbaren oder festgelegten Soll-Wert zu steuern, um den Drehantrieb (1) auf den Soll-Wert einzustellen.

12. Drehanatrieb (1) nach einem der Ansprüche 8 bis 11, **dadurch gekennzeichnet, dass** die Steuerung ausgelegt ist, so auf die einzelnen Elektromotoren (11) einzuwirken, dass die einzelnen Elektromotoren (11) gleichmäßig belastet werden, und/oder dass das Gesamtdrehmoment des elektromotorischen Antriebs (16) auf alle Elektromotoren (11) synchron verteilt wird.

13. Bausatz zum Zusammenstellen eines Drehanatriebs (1) nach einem der vorhergehenden Ansprüche, **dadurch gekennzeichnet, dass** für unterschiedliche Leistungen des elektro-motorischen Antriebs (16) Elektromotoren (11) gleichen Durchmessers und unterschiedlicher Wicklungslängen enthalten sind.

14. Bausatz zum Zusammenstellen eines Drehanatriebs (1) nach einem der Ansprüche 1 bis 12, **dadurch gekennzeichnet, dass** eine Mehrzahl von kombinierbaren Bestandteilen der Abtriebseinrichtungen (A) für unterschiedliche Montagen des Drehantriebs (1) und/oder für unterschiedliche Anschlüsse oder Kombinationen von Drehantriebsabnehmern, und/oder als Bestandteile eines Getriebes (17) zur Realisierung verschiedener Über- oder Untersetzungen des Drehantriebs (1) enthalten sind.

15. Zahnstangenantrieb (32; 34) mit einem Drehantrieb (1) nach einem der Ansprüche 1 bis 12, **dadurch gekennzeichnet, dass** die Abtriebseinrichtungen (A) am von den Elektromotoren (11) abgewandten Ende ein Stirnrad (33; 35) aufweisen, das mit einer Zahnstange (36) kämmt.
